(19) Europäisches Patentamt
European Patent Office
Office européen des brevets

(11) EP 1 551 662 B1

(12) EUROPÄISCHE PATENTSCHRIFT

(45) Veröffentlichungstag und Bekanntmachung des Hinweises auf die Patenterteilung:
**02.04.2008 Patentblatt 2008/14**

(21) Anmeldenummer: **03773447.2**

(22) Anmeldetag: **24.09.2003**

(51) Int Cl.:
*B60W 30/18* (2006.01)    *B60W 10/06* (2006.01)
*B60W 10/10* (2006.01)    *F16H 3/00* (2006.01)

(86) Internationale Anmeldenummer:
**PCT/DE2003/003173**

(87) Internationale Veröffentlichungsnummer:
**WO 2004/033246 (22.04.2004 Gazette 2004/17)**

(54) **VERFAHREN ZUR STEUERUNG VON SCHALTVORGÄNGEN EINES LASTSCHALTGETRIEBES UND LASTSCHALTGETRIEBE HIERZU**

METHOD FOR CONTROLLING GEAR-SHIFTING PROCESSES OF A POWERSHIFT GEARBOX AND CORRESPONDING POWERSHIFT GEARBOX

PROCEDE DE COMMANDE DES CHANGEMENTS DE RAPPORTS D'UNE BOITE COUPLABLE SOUS CHARGE ET BOITE DE VITESSES COUPLABLE SOUS CHARGE

(84) Benannte Vertragsstaaten:
**AT BE BG CH CY CZ DE DK EE ES FI FR GB GR HU IE IT LI LU MC NL PT RO SE SI SK TR**

(30) Priorität: **04.10.2002 DE 10246330**

(43) Veröffentlichungstag der Anmeldung:
**13.07.2005 Patentblatt 2005/28**

(73) Patentinhaber: **LuK Lamellen und Kupplungsbau Beteiligungs KG**
**77815 Bühl (DE)**

(72) Erfinder:
• **BERGER, Reinhard,**
**77815 Bühl (DE)**
• **HIRT, Gunter**
**90617 Puschendorf (DE)**

• **SCHWEIZER, Alexander**
**75045 Walzbachtal-Jöhlingen (DE)**
• **SEREBRENNIKOV, Boris**
**77815 Bühl-Kappelwindeck (DE)**
• **BUDAL, Lidvar**
**N-3611 Kongsberg (NO)**
• **SHELLHAMMER, Brad**
**77815 Bühl (DE)**
• **WHITMER, Jeremy**
**77815 Bühl (DE)**
• **LANG, Dietmar**
**66989 Höheischweiler (DE)**

(56) Entgegenhaltungen:
**EP-A- 1 072 820        EP-A- 1 122 116**
**DE-A- 4 204 401**

**Beschreibung**

Die vorliegende Erfindung betrifft ein Verfahren zur Steuerung von Schaltvorgängen eines mit einem Antriebsmotor kuppelbaren Lastschaltgetriebes, welches zwei Reibungskupplungen sowie mehrere Schaltkupplungen aufweisende Gangstufen und mindestens einen Getriebeaktor zur Betätigung der Gangstufen besitzt. Die Erfindung betrifft außerdem ein nach diesem Verfahren arbeitendes Lastschaltgetriebe.

Neben den bereits bekannten Handschaltgetrieben für beispielsweise Personenkraftwagen, bei denen der Gangwechsel bzw. Schaltvorgang über eine Betätigung eines Schalthebels durch den Fahrer des Fahrzeugs vorgenommen wird, und Automatikgetrieben in der Form von Planetengetrieben sind auch bereits Lastschaltgetriebe in der Form eines beispielsweise unterbrechungsfreien Schaltgetriebes bekannt geworden. Ein solches Lastschaltgetriebe weist ein Anfahrelement in der Form einer Reibungskupplung auf und besitzt eine zweite Reibungskupplung, mit der es ermöglicht wird, bei geschlossener Anfahrkupplung und an der Getriebeeingangswelle wirkendem Drehmoment einer Drehmomentübertragung zwischen der Eingangswelle und der Ausgangswelle des Getriebes zu realisieren, so dass ein Schaltvorgang ohne Zugkraftunterbrechung herbeigeführt werden kann.

Es sind auch bereits unter dem Begriff des Doppelkupplungsgetriebes Getriebe bekannt geworden, mit denen Lastschaltungen durchgeführt werden können. Ein solches Doppelkupplungsgetriebe kann als zwei ineinandergeschachtelte automatisierte Schaltgetriebe aufgefasst werden, bei dem jeder Getriebeeingangswelle durch synchronisierte Klauenkupplungen oder Schaltkupplungen geschaltete Gangpaare sowie eine Reibungskupplung zugeordnet sind.

Die Gänge oder Gangstufen eines solchen Doppelkupplungsgetriebes können durch mindestens einen Getriebeaktor geschaltet werden und die Kupplungen über beispielsweise je einen Kupplungsaktor.

Im normalen Fahrzustand wird dabei das Antriebsmoment des Verbrennungsmotors über eine der beiden Kupplungen, die zugehörige Getriebeeingangswelle sowie eine der jeweiligen Getriebeeingangswelle zugeordnete Gangstufe zum Differenzial übertragen und von diesem weiter auf die Räder geleitet.

Wenn ein Schaltvorgang ablaufen soll und sich das Fahrzeug im normalen Fahrzustand befindet, dann ist die der eingelegten Gangstufe zugeordnete Reibungskupplung geschlossen und die andere Reibungskupplung offen und die zugehörige Zielgangstufe kann eingelegt werden. Durch ein kontrolliertes Schließen der der Zielgangstufe zugeordneten neuen Reibungskupplung bestimmt diese den Momentenfluss über die neue Zielgangstufe und damit auch den Momentenfluss über die sich noch im Eingriff befindende alte Gangstufe. Die neue Reibungskupplung befindet sich dabei zunächst in einem Schlupfzustand, der später in einen Haftzustand übergeht Nach der vollständigen Momentenübernahme durch die neue Zielgangstufe bzw. die neue Reibungskupplung wird die der alten Gangstufe zugeordnete Reibungskupplung geöffnet und dadurch das entsprechende Teilgetriebe von der Momentenübertragung abgekoppelt Nach einem Synchronisiervorgang zwischen der Motordrehzahl und der Getriebedrehzahl fährt dann das Fahrzeug in der neuen Zielgangstufe und die dieser zugeordnete Reibungskupplung schlupft nicht mehr.

Vorstehend wurde eine sogenannte Überschneidungsschaltung geschildert, bei der es aber infolge von nicht exakten Überschneidungen zu Momentenstößen kommen kann, was sich letztlich beim Gangwechsel als Beschleunigungsveränderung darstellen kann.

Die EP 1 122 116 A2 beschreibt eine Überschneidungsschaltung, vorgesehenen Gangwechsel vorgespannt wird. Bei der die Schiebehülse zum schnelleren Auslegen bei einem Ausgehend hiervon ist es Aufgabe der vorliegenden Erfindung, ein Verfahren zur Steuerung von Schaltvorgängen zu schaffen welches Momentenstöße vermeidet. Auch soll ein nach diesem Verfahren arbeitendes lastschaltbares Getriebe geschaffen werden.

Die zur Lösung dieser Aufgabe hinsichtlich des Verfahrens geschaffene Erfindung sieht nunmehr ein Verfahren vor zur Steuerung von Schaltvorgängen eines mit einem Antriebsmotor kuppelbaren Lastschaltgetriebes, welches zwei Reibungskupplungen sowie mehrere Schaltkupplungen aufweisende Gangstufen und mindestens einen Getriebeaktor zur Betätigung der Gangstufen besitzt und bei dem das Moment des Antriebsmotors in der Form eines Zugmoments oder Schubmoments mittels der der einzulegenden neuen Gangstufe zugeordneten neuen Reibungskupplung übernommen wird und vor dem Auslegen der auszulegenden alten Gangstufe und vor oder während der Momentenübernahme durch die neue Reibungskupplung mittels des Getriebeaktors eine vorbestimmte Vorspannkraft an die Schaltkupplung der alten Gangstufe angelegt wird und bei Gleichgewicht des Motormoments und des Kupplungsmoments die alte Gangstufe durch die vorbestimmte Spannkraft selbständig ausgelegt wird.

Aufgrund der vom Getriebeaktor an der Schaltverzahnung der alten Gangstufe angelegten vorbestimmten Vorspannkraft beim Momentennulldurchgang (Momentengleichgewicht an der Kupplung der neuen Gangstufe) kann der Getriebeaktor den Gang leichtgängig herausziehen und somit finder eine Überschneidungsschaltung zwischen der Reibungskupplung und der Schaltkupplung der neuen Gangstufe statt und nicht mehr eine Überschneidungsschaltung zwischen zwei Reibungskupplungen.

Nach dem Auslegen der alten Gangstufe wird der Schlupf in der neuen Reibungskupplung verringert. Es hat sich dabei als vorteilhaft erwiesen, wenn der Schlupf In der neuen Reibungskupplung mittels eines kombinierten Eingriffs auf das Motormoment und das Kupplungsmoment verringert wird.

Diese Vorgehensweise weist gegenüber einem Modulieren des Kupplungsmoments bei unverändertem Antriebsmotormoment den Vorteil auf, dass sich die spürbare Fahrzeugbeschleunigung nicht ändert. Auch wäre eine alternative Vorgehensweise, nämlich einen Motoreingriff bei konstant bleibendem Kupplungsmoment durchzuführen, von Nachteil, da der Verbrennungsmotor aufgrund seiner Trägheit relativ schwer regelbar ist.

Durch den vorstehend erwähnten kombinierten Eingriff auf das Motormoment und das Kupplungsmoment wird erreicht, dass das Motormoment nur gesteuert werden muss In der Form einer Sollvorgabe, die nach einer vorteilhaften Ausführungsform derart stattfindet, dass das Integral des Differenzmoments bei einem unveränderten Kupplungsmoment die Drehzahlanpassung bewirkt. Unter dem Differenzmoment ist dabei die Differenz zwischen Motormoment und Kupplungsmoment zu verstehen gemäß folgender Beziehung:

$$\frac{1}{J_{Motor}} \int_{T_{Beginn}}^{T_{Def}} (\dot{M}_{Motor} - M_{Kupplung}) \cdot dt = \Delta\omega$$

Als Kern der der Erfindung ist vorgesehen, dass zu Beginn der Schlupfverringerung das Sollmotormoment nach einer Sprungfunktion verändert wird und dann weitgehend linear dem Fahrerwunschmoment nach dem Schaltvorgang angepasst wird.

In Fortführung der Erfindung wird dabei nach einer weitgehenden Annäherung des Motormoments an das Kupplungsmoment die neue Reibungskupplung derart angesteuert, dass ein weicher Übergang vom Schlupfzustand in den Haftzustand der neuen Reibungskupplung stattfindet Je besser dabei der Motoreingriff realisiert werden kann, desto weniger muss das Kupplungsmoment moduliert werden und als um so glatter stellt sich das am Abtrieb wirkende Moment ein.

Aufgrund von bei Fahrzeugen oftmals anzutreffenden elektronischen Fahrpedalen (E-Gas) ist es möglich, den direkten Zusammenhang zwischen Fahrpedal und Drosselklappenwinkel aufzuheben und somit unterschiedliche Motormomente einzustellen. Damit kann erreicht werden, das am Rad wirksame Antriebsmoment vor und nach einem Schaltvorgang weitgehend konstant zu halten. Es hat sich dabei eine Vorgehensweise als vorteilhaft erwiesen, nach der das Motormoment bereits während der Momentenübernahme durch die neue Reibungskupplung verändert wird. Damit wird erreicht, dass die am Abtrieb wirksame Beschleunigungsminderung aufgrund der Lastverzweigung im Getriebe beim Anlegen der zweiten Reibungskupplung durch eine koordinierte Motormomentenerhöhung kompensiert werden kann.

Nach der Erfindung ist auch ein Verfahren zur Durchführung eines Anfahrvorgangs eines Fahrzeugs mit einem Antriebsmotor mit damit kuppelbarem Lastschaltgetriebe vorgesehen, gemäß dem der Anfahrvorgang mit einer hoch übersetzten ersten Gangstufe durchgeführt wird und das Motormoment von der neuen Reibungskupplung übernommen wird, bevor der Schlupfzustand der der ersten Gangstufe zugeordneten alten Reibungskupplung endet oder bevor die Drehzahl der Getriebeeingangswelle mit der ersten Gangstufe die Motordrehzahl erreicht.

Es bedeutet dies mit anderen Worten, dass ein Anfahrvorgang mit einem kurz übersetzten ersten Gang durchgeführt wird, was zu einer hohen Beschleunigung beim Anfahren führt und das Motormoment von der der zweiten Gangstufe zugeordneten neuen Reibungskupplung schon übernommen wird, bevor der Schlupfzustand (die der ersten Gangstufe zugeordnete alte Reibungskupplung befindet sich beim Anfahren im Schlupfzustand) der der ersten Gangstufe zugeordneten alten Reibungskupplung endet oder bevor die Drehzahl der Getriebeeingangswelle der ersten Gangstufe die Motordrehzahl erreicht hat Dies führt einerseits zu einer hohen Anfahrbeschleunigung und resultiert nicht in einer Komforteinbuße bei dem sich anschließenden Schaltvorgang von der ersten zur zweiten Gangstufe, da die der zweiten Gangstufe zugeordnete neue Reibungskupplung das Motormoment bereits übernimmt, während sich die der ersten Gangstufe zugeordnete alte Reibungskupplung noch im Schlupfzustand befindet oder bevor die Getriebeeingangswelle mit der darauf angeordneten ersten Gangstufe die Motordrehzahl erreicht hat.

Die Erfindung sieht ein Lastschaltgetriebe vor mit zwei Reibungskupplungen sowie mehrere Schaltkupplungen aufweisende Gangstufen und mindestens einen Getriebeaktor zur Betätigung der Gangstufen, bei dem der Getriebeaktor vor oder während der Momentenübernahme durch eine der einzulegenden Gangstufe zugeordnete neue Reibungskupplung eine vorbestimmte Vorspannkraft an die Schaltkupplung der auszulegenden alten Gangstufe anlegt und bei Gleichgewicht des Motormoments und des Kupplungsmoments die alte Gangstufe durch die Vorspannkraft selbständig auslegt. Das Kennzeichen des Anspruchs 9 charakterisiert dabei die erfinderischen Merkmale.

Das so ausgebildete Lastschaltgetriebe ermöglicht ein schnelles Auslegen der alten Gangstufe im Augenblick des Momentengleichgewichts an der Kupplung der neuen Gangstufe, so dass eine Überschneidungsschaltung zwischen der Reibungskupplung und der Schaltkupplung der neuen Gangstufe stattfindet und nicht mehr eine Überschneidungsschaltung zwischen zwei Reibungskupplungen, was dazu führt, dass sich Modulationen des Kupplungsmoments der alten Reibungskupplung nicht mehr in Beschleunigungsveränderungen des Fahrzeugs ausdrücken können.

Nach einer Weiterbildung der Erfindung besitzt das Lastschaltgetriebe eine hoch übersetzte erste Gangstufe und eine Reibungskupplung, die das Motormoment von der der ersten Gangstufe zugeordneten Reibungskupplung übernimmt, bevor der Schlupfzustand der der ersten Gangstufe zugeordneten Reibungskupplung endet oder bevor die Drehzahl der Getriebeeingangswelle mit der ersten Gangstufe die Motordrehzahl erreicht.

Damit ermöglicht das Getriebe einen Anfahrvorgang mit hoher Fahrzeugbeschleunigung und hohem Schaltkomfort, da eine ausgeprägte Beschleunigungsveränderung zum Ende der beschleunigten Fahrt im ersten Gang vermieden wird, da eine Momentenübernahme durch die der zweiten Gangstufe zugeordnete Kupplung schon stattfindet, bevor der Schlupfzustand der dem ersten Gang zugeordneten Reibungskupplung endet oder bevor die Drehzahl der Getriebeeingangswelle mit der ersten Gangstufe die Motordrehzahl erreicht.

Die Erfindung wird im Folgenden anhand der Zeichnung näher erläutert. Diese zeigt in:

Fig. 1      ein Diagramm des Motor- und Kupplungsmoments beim Schaltvorgang über der Zeit;

Fig. 2      ein Diagramm, das einen Motoreingriff zeigt; und

Fig. 3A-C      Ablaufdiagramme zur Erläuterung eines Schaltvorgangs.

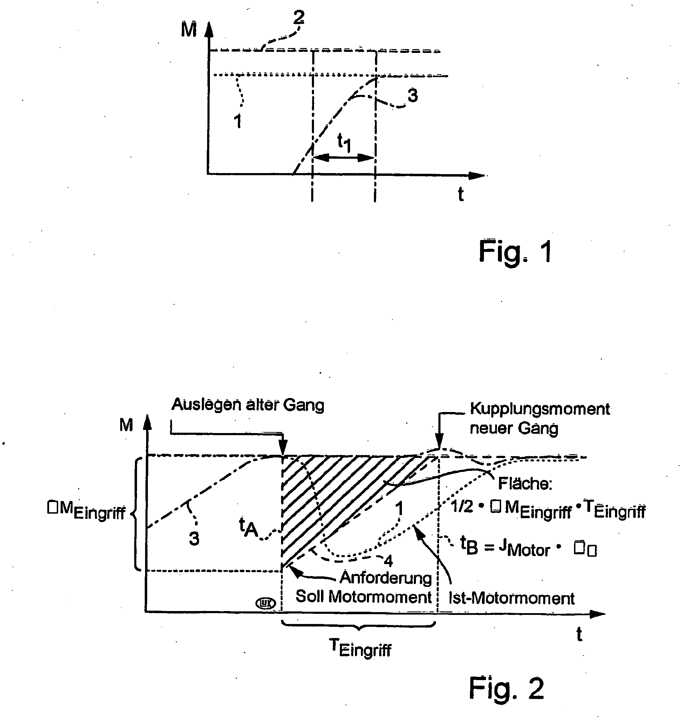

Fig. 1 der Zeichnung zeigt ein Diagramm mit einer schematischen Darstellung des Motormoments sowie der Kupplungsmomente beim Schaltvorgang aufgetragen über der Zeit. Bei dieser schematischen Darstellung verbleibt des Motormoment 1 während des Schaltvorgangs konstant. Auch das Kupplungsmoment 2 der der auszulegenden alten Gangstufe zugeordneten Reibungskupplung verbleibt in dieser schematischen Darstellung konstant und weist gegenüber dem Motormoment eine Momentenüberhöhung auf. Das Kupplungsmoment 3 der der neuen Gangstufe zugeordneten neuen Reibungskupplung 3 steigt bei dieser schematischen Darstellung bei der Momentenübernahme weitgehend linear an und nähert sich dann dem Motormoment 1 an.

In der Phase $t_1$ wird über den Getriebeaktor eine vorbestimmte Vorspannkraft an die Schaltkupplung der auszulegenden alten Gangstufe angelegt, so dass im Augenblick des Momentengleichgewichts an der neuen Reibungskupplung der Getriebeaktor die bereits vorgespannte Schaltverzahnung leicht und schnell öffnen kann. Durch diese Vorgehensweise wird eine Annäherung an den Idealzustand erreicht, der dann erreicht wäre, wenn im Moment des Gleichgewichts von Motormoment und Reibmoment in der Kupplung des neuen Gangs der alte Gang unendlich Schnell abgekoppelt werden könnte. Durch die vorbestimmte Vorspannkraft an der Schaltverzahnung der alten Gangstufe wird ein schnelles Auslegen der alten Gangstufe erreicht und das eventuelle Auftreten von Momentenstößen, wie es bei einer Überschneidungsschaltung zwischen zwei Reibungskupplungen der Fall sein kann, vermieden.

Fig. 2 der Zeichnung zeigt nun ein Diagramm eines gesteuerten Motoreingriffs bei der Motorsynchronisierung.

Das Motorsollmoment wird dabei genau so gewählt, dass das Integral des Differenzmoments aus dem Motormoment reduziert um das Kupplungsmoment während der Zeit, über die der Motoreingriff stattfindet, bei einem unveränderten Kupplungsmoment die Drehzahlanpassung bei der Motorsynchronisierung bewirkt.

Das Kupplungsmoment 3 der der neuen Gangstufe zugeordneten Kupplung steigt bereits vor dem Zeitpunkt $t_A$ an, bis es das Ist-Motormoment 1 erreicht. Zum Zeitpunkt $t_A$ wird die alte Gangstufe ausgelegt und es beginnt die Motorsynchronisierung, d.h. der Schlupf in der dem neuen Gang zugeordneten Kupplung muss abgebaut werden. Zu diesem Zweck wird das Soll-Motormoment zum Zeitpunkt $t_A$ sprungförmig verändert und anschließend rampenförmig an das vom Fahrer gewünschte Motormoment hin angeglichen, das beispielsweise dem Motormoment vor dem Eingriff entsprechen kann. Die in der Fig. 2 schraffierte Fläche entspricht dabei dem vorstehend erwähnten Integral über das Differenzmoment aus Motormoment und Kupplungsmoment und damit dem Trägheitsmoment des Motors Multipliziert mit der Drehzahlveränderung während der Motorsynchronisierung.

Wie es anhand von Fig. 2 ersichtlich ist, wird das Kupplungsmoment 3 der der neuen Zielgangstufe geordneten Reibungskupplung vor dem Zeitpunkt $t_B$, zu dem der Motoreingriff beendet ist, geringfügig erhöht, so dass ein weicher Übergang vom Schlupfzustand in den Haftzustand der Kupplung stattfindet.

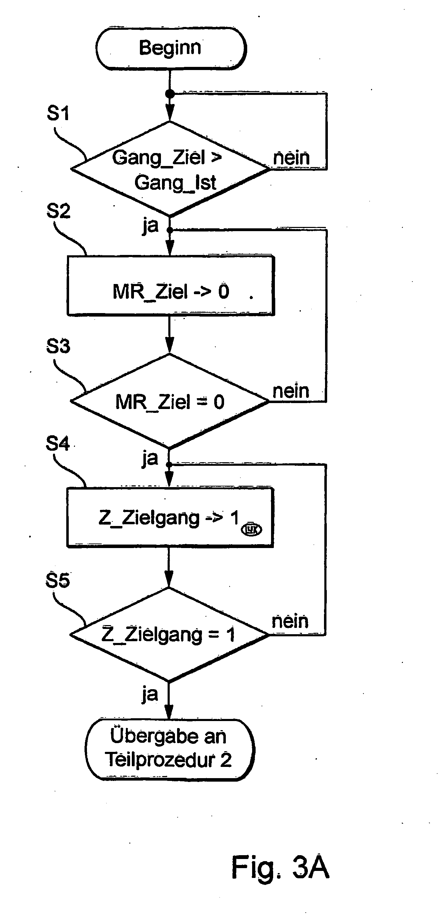

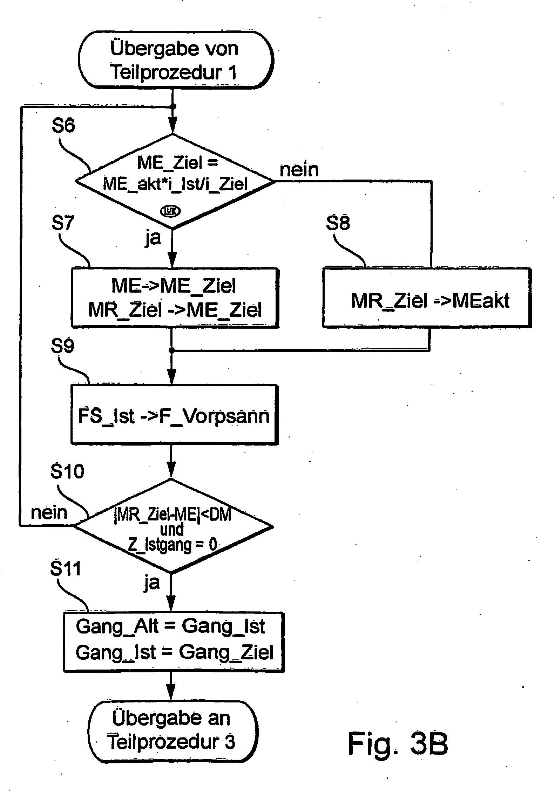

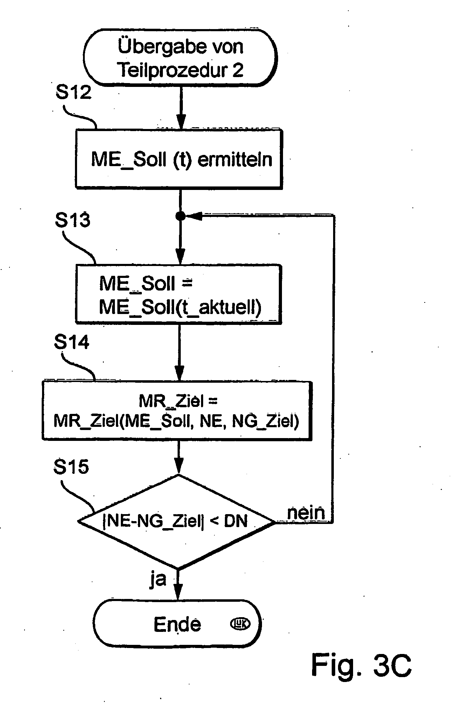

Nachfolgend wird unter Bezugnahme auf Fig. 3A, 3B und 3C als Beispiel für einen Schaltvorgang bei einer Zughochschaltung der Gesamtablauf eines solchen Schaltvorgangs dargestellt, wobei bezüglich der Variablen Folgendes gilt:

| | |
|---|---|
| Gang_x: | Gangnummer |
| MR_x: | Reibmoment in der zum indizierten Gang gehörenden Kupplung |
| Z_x: | Schaltzustand des indizierten Gangs (1 =geschaltet; 0=n. geschaltet) |
| ME_x: | Motormoment (aktuelles Sollmoment, akt. Moment bzw. Zielmoment |
| FS_x: | Schaltkraft für den indizierten Gang |
| DM: | Momentenschwelle |
| DN: | Drehzahlschwelle |
| NE: | Motordrehzahl, |
| NG_x: | Drehzahl der zum indizierten Gang gehörenden Getriebeeingangswelle |
| -> | Änderung einer Steuerungsgröße (Zeitverlauf) |
| = | Variablenzuweisung, Gleichheitsabfrage. |

In einem ersten Schritt S1 wird überprüft, ob die neue Zielgangstufe einer Hochschaltanforderung entspricht. Wenn dies der Fall ist, wird in einem Schritt S2 das Öffnen der dem neuen Zielgang zugeordneten Kupplung angefordert, d.h. das Reibmoment in der zu diesem neuen Zielgang gehörenden Kupplung auf Null zurückgefahren und dann in einem nächsten Schritt S3 überprüft, ob das Reibmoment dieser Kupplung bereits auf Null zurückgefahren wurde. Wenn dies der Fall ist, wird in einem nächsten Schritt S4 angefordert, den Schaltzustand des neuen Zielgangs auf 1 zu setzen, d.h. den geschalteten Zustand herbeizuführen. Der aktuelle Schaltzustand wird dann In einem nächsten Schritt S5 überprüft, so dass eine Übergabe der Ablaufsteuerung bei erfüllter Bedingung Schaltzustand = 1 zum nächsten Schritt S6 stattfinden kann.

In der mit dem Schritt S6 beginnenden zweiten Teilprozedur findet die Momentenübernahme durch die zugehörige Kupplung statt. Zu diesem Zweck wird im Schritt S6 zunächst übürprüft, ob eine Korrektur des Motormoments zur Anpassung des am Antriebsrad herrschenden. Radmoments nach dem Schaltvorgang stattfinden soll. Eine solche Anpassung des Motormoments kann dann geschehen, wenn das Motorzielmoment nicht außerhalb des vom Motor erreichbaren Momentenbereichs liegt, der Motor also beispielsweise noch nicht unter Volllast läuft. In einem Schritt S7 werden das Motormoment und das Kupplungsmoment koordiniert auf den Wert des Zielmotormoments nach der Schaltung angehoben und wenn eine Motormomentenanpassung nicht möglich öder erwünscht ist, wird in einem Schritt S8 das Kupplungsmoment auf den Wert des aktuellen Motor Ist-Moments angehoben.

Zeitlich parallel wird die vorbestimmte Vorspannkraft zum Auslegen der alten Gangstufe in einem Schritt S9 aufgebracht, da die alte Gangstufe immer noch die aktuelle ist-Gangstufe ist. In einem nächsten Schritt S10 wird die alte Gangstufe ausgelegt und die Getriebevariablen werden in einem weiteren Schritt S11 neu belegt.

Nach erfolgtem Schritt S11 erfolgt eine Übergabe des Ablaufschemas an eine dritte Teilprozedur, in der eine Synchronisierung des Antriebsmotors stattfindet.

Hierzu wird zunächst in einem Schritt S12 in Abhängigkeit vom aktuellen Betriebszustand des Motors der Soll-Verlauf für den vorstehend bereits geschilderten gesteuerten Motoreingriff ermittelt werden. Hieran schließt sich dann ein Schritt S13 an, in dem das Soll-Motormoment als Funktion der Zeit ermittelt wird und in einem Schritt S14 wird das Kupplungsmoment in der der neuen Zielgangstufe zugeordneten Kupplung in Abhängigkeit von der zum neuen Zielgang gehörenden Getriebeeingangswellendrehzahl und dem Soll-Motormoment ermittelt. Im Schritt S15 wird überprüft, ob eine Differenz zwischen der Motordrehzahl und der zur neuen Gangstufe gehörenden Getriebeeingangswellendrehzahl besteht und ob diese Drehzahldifferenz kleiner ist als eine Drehzahlschwelle, d.h. der Synchronisierungsvorgang abgeschlossen ist. Wenn dies nicht der Fall ist, dann findet ein Rücksprung zum Schritt S13 statt und nach einem neuen Prozedurdurchlauf eine weitere Überprüfung im Schritt S15. Wenn die Überprüfung im Schritt S15 ergibt, dass die Drehzahldifferenz kleiner geworden ist als eine vorbestimmte Drehzahlschwelle, dann ist die Motorsynchronisierung abgeschlossen.

Damit kann ein für den Fahrer kaum oder nicht mehr spürbarer Schaltvorgang unter Verwendung einer Überblendungsschaltung zwischen einer Reibungskupplung und der Schaltverzahnung der einzelnen Gangstufen realisiert werden, womit ein hoher Schaltkomfort einhergeht.

Hinsichtlich vorstehend im Einzelnen nicht näher erläuterter Merkmale der Erfindung wird im Übrigen ausdrücklich auf die Ansprüche verwiesen.

Die mit der Anmeldung eingereichten Patentansprüche sind Formulierungsvorschläge ohne Präjudiz für die Erzielung weitergehenden Patentschutzes. Die Anmelderin behält sich vor, noch weitere, bisher nur in der Beschreibung und/oder den Zeichnungen offenbarte Merkmalskombinationen zu beanspruchen.

In Unteransprüchen verwendete Rückbeziehungen weisen auf die weitere Ausbildung des Gegenstandes des Hauptanspruches durch die Merkmale des jeweiligen Unteranspruches hin; sie sind nicht als ein Verzicht auf die Erzielung eines selbstständigen, gegenständlichen Schutzes für die Merkmalskombinationen der rückbezogenen Unteransprüche zu verstehen.

Da die Gegenstände der Unteransprüche im Hinblick auf den Stand der Technik am Prioritätstag eigene und unabhängige Erfindungen bilden können, behält die Anmelderin sich vor, sie zum Gegenstand unabhängiger Ansprüche oder Teilungserklärurigen zu machen. Sie können weiterhin auch selbstständige Erfindungen enthalten, die eine von den Gegenständen der vorhergehenden Unteransprüche unabhängige Gestaltung aufweisen.

Die Ausführungsbeispiele sind nicht als Einschränkung der Erfindung zu verstehen. Vielmehr sind im Rahmen der vorliegenden Offenbarung zahlreiche Abänderungen und Modifikationen möglich, insbesondere solche Varianten, Elemente und Kombinationen und/oder Materialien, die zum Beispiel durch Kombination oder Abwandlung von einzelnen in Verbindung mit den in der allgemeinen Beschreibung und Ausführungsformen sowie den Ansprüchen beschriebenen und in den Zeichnungen enthaltenen Merkmalen bzw. Elementen oder Verfahrensschritten für den Fachmann im Hinblick auf die Lösung der Aufgabe entnehmbar sind und durch kombinierbare Merkmale zu einem neuen Gegenstand oder zu neuen Verfahrensschritten bzw. Verfahrensschrittfolgen führen, auch soweit sie Hütstell-, Prüf- und Arbeitsverfahren betreffen.

**Patentansprüche**

1.    Verfahren zur Steuerung von Schaltvorgängen eines mit einem Antriebsmotor kuppelbaren Lastschaltgetriebes, welches zwei Reibungskupplungen sowie mehrere Schaltkupplungen aufweisende Gangstufen und mindestens einen Getriebeaktor zur Betätigung der Gangstufen besitzt mit folgenden Schritten:

- das Moment des Antriebsmotors wird mittels der der einzulegenden neuen Gangstufe zugeordneten neuen Reibungskupplung übernommen:
- vor dem Auslegen der auszulegenden alten Gangstufe und vor oder während der Momentenübernahme wird mittels des Getriebeaktors eine vorbestimmte Vorspannkraft an die Schaltkupplung der alten Gangstufe angelegt;
- bei Gleichgewicht des Motormoments und des Kupplungsmoments wird die alte Gangstufe ausgelegt,

**dadurch gekennzeichnet, dass** zu Beginn einer Schlupfverringerung der neuen Reibungskupplung das Motormoment in der Form einer Sollvorgabe gesteuert wird, wobei as Sollmotormoment nach einer Sprungfunktion verändert wird und dann weitgehend linear einem Fahrerwunschmoment nach dem Schaltvorgang angepasst wird.

2. Verfahren nach Anspruch 1, **dadurch gekennzeichnet, dass** nach dem Auslegen der alten Gangstufe der Schlupf in der neuen Reibungskupplung verringert wird.

3. Verfahren nach Anspruch 1 oder 2, **dadurch gekennzeichnet, dass** der Schlupf in der neuen Reibungskupplung mittels eines kombinierten Eingriffs auf das Motormoment und das Kupplungsmoment verringert wird.

4. Verfahren nach einem der Ansprüche 1 bis 3, **dadurch gekennzeichnet, dass** das Sollmotormoment nach folgender Beziehung vorgewählt wird:

$$\frac{1}{J_{Motor}} \int_{T_{Beginn}}^{T_{End}} (M_{Motor} - M_{Kupplung}) \cdot dt = \Delta\omega$$

5. Verfahren nach einem der Ansprüche 1 bis 4, **dadurch gekennzeichnet, dass** nach einer weitgehenden Annäherung des Motormoments an das Kupplungsmoment die neue Reibungskupplung derart angesteuert wird, dass ein weicher Übergang vom Schlupfzustand in den Haftzustand der neuen Reibungskupplung stattfindet.

6. Verfahren nach einem der Ansprüche 1 bis 5, **dadurch gekennzeichnet, dass** das Motormoment derart verändert wird, dass das am Rad wirksame Antriebsmoment vor und nach dem Schaltvorgang weitgehend gleich ist.

7. Verfahren nach Anspruch 6, **dadurch gekennzeichnet, dass** das Motormoment während der Momentenübernahme durch die neue Reibungskupplung verändert wird.

8. Verfahren nach einem der Ansprüche 1 bis 7 zur Durchführung eines Anfahrvorgangs eines Fahrzeugs mit einem Antriebsmotor mit damit kuppelbaren Lastschaltgetriebe, **dadurch gekennzeichnet, dass** der Anfahrvorgang mit einer hoch übersetzten ersten Gangstufe durchgeführt wird und das Motormoment von der neuen Reibungskupplung übernommen wird, bevor der Schlupfzustand der der ersten Gangstufe zugeordneten alten Reibungskupplung endet oder bevor die Drehzahl der Getriebeeingangswelle mit der ersten Gangstufe die Motordrehzahl erreicht.

9. Lastschaltgetriebe mit zwei Reibungskupplungen sowie mehrere Schaltkupplungen aufweisende Gangstufen und mindestens einem Getriebeaktor zur Betätigung der Gangstufen, wobei der Getriebeaktor vor oder während der Momentenübernahme durch eine der einzulegenden Gangstufe zugeordnete neue Reibungskupplung eine vorbestimmte Vorspannkraft an die Schaltkupplung der auszulegenden alten Gangstufe anlegt und bei Gleichgewicht des Motormoments und des Kupplungsmoments die alte Gangstufe ausgelegt, **dadurch gekennzeichnet, dass** zu Beginn einer Schlupfverringerung der neuen Reibungskupplung das Motormoment in der Form einer Sollvorgabe gesteuert wird, wobei das Sollmotormoment nach einer Sprungfunktion verändert wird und dann weitgehend linear einem Fahrerwunschmoment nach dem Schaltvorgang angepasst wird.

10. Lastschaltgetriebe nach Anspruch 9, **gekennzeichnet durch** eine hoch übersetzte erste Gangstufe und eine Reibungskupplung, die das Motormoment von der der ersten Gangstufe zugeordneten Reibungskupplung übernimmt, bevor der Schlupfzustand der der ersten Gangstufe zugeordneten Reibungskupplung endet oder bevor die Drehzahl der Getriebeeingangswelle mit der ersten Gangstufe die Motordrehzahl erreicht.

**Claims**

1. Method for controlling shift processes of a powershift transmission which can be coupled to a drive engine and which has two friction clutches and a plurality of gear stages which have shift clutches and at least one transmission actuator for actuating the gear stages, having the following steps:

- the torque of the drive engine is taken over by means of the new friction clutch which is assigned to the new gear stage which is to be engaged;
- before the disengagement of the old gear stage and before or during the takeover of torque, a predetermined preload force is applied by means of the transmission actuator to the shift clutch of the old gear stage;
- when equilibrium between the engine torque and clutch torque is obtained, the old gear stage is disengaged,

**characterized in that**, at the start of a slip reduction of the new friction clutch, the engine torque is controlled in the form of a nominal predefined value, with the nominal engine torque being varied according to a step function and then being adapted in a substantially linear fashion to a driver demand torque after the shift process.

2. Method according to Claim 1, **characterized in that**, after the disengagement of the old gear stage, the slip in the new friction clutch is reduced.

3. Method according to Claim 1 or 2, **characterized in that** the slip in the new friction clutch is reduced by means of a combined action on the engine torque and the clutch torque.

4. Method according to one of Claims 1 to 3, **characterized in that** the nominal engine torque is preselected according to the following relationship:

$$\frac{1}{J_{Engine}} \int_{T_{Start}}^{T_{End}} (M_{Engine} - M_{Clutch}) \cdot dt = \Delta\omega$$

5. Method according to one of Claims 1 to 4, **characterized in that**, after a close approximation of the engine torque to the clutch torque, the new friction clutch is activated in such a way that a soft transition from the slipping state into the engaged state of the new friction clutch takes place.

6. Method according to one of Claims 1 to 5, **characterized in that** the engine torque is varied in such a way that the drive torque which acts at the wheel is substantially equal before and after the shift process.

7. Method according to Claim 6, **characterized in that** the engine torque is varied by means of the new friction clutch during the takeover of torque.

8. Method according to one of Claims 1 to 7 for carrying out a starting process of a vehicle having a drive engine with a powershift transmission which can be coupled thereto, **characterized in that** the starting process is carried out with a step-up first gear stage, and the engine torque is taken over by the new friction clutch before the slipping state of the old friction clutch which is assigned to the first gear stage ends or before the rotational speed of the transmission input shaft having the first gear stage reaches the engine rotational speed.

9. Powershift transmission having two friction clutches and a plurality of gear stages which have shift clutches and at least one transmission actuator for actuating the gear stages, **characterized in that**, before or during the takeover of torque by a new friction clutch which is assigned to the gear stage which is to be engaged, the transmission actuator applies a predetermined preload force to the shift clutch of the old gear stage which is to be disengaged, and when equilibrium between the engine torque and clutch torque is obtained, the old gear stage is disengaged, thereby at the start of a slip reduction of the new friction clutch, the engine torque is controlled in the form of a nominal predefined value, with the nominal engine torque being varied according to a step function and then being adapted in a substantially linear fashion to a driver demand torque after the shift process.

10. Powershift transmission according to Claim 9, **characterized by** a step-up first gear stage and by a friction clutch which takes over the engine torque from the friction clutch which is assigned to the first gear stage before the slipping state of the friction clutch which is assigned to the first gear stage ends or before the rotational speed of the transmission input shaft having the first gear stage reaches the engine rotational speed.

11. Powershift transmission according to Claim 1 or 10, **characterized by** a step-up first gear stage for starting and by a friction clutch which takes over the engine torque from the friction clutch which is assigned to the first stage before the slipping state of the old friction clutch which is assigned to the first gear stage ends or before the rotational speed of the transmission input shaft having the first gear stage reaches the engine rotational speed.

**Revendications**

1. Procédé de commande des changements de vitesses d'une boîte de vitesses commandée en charge, couplable avec un moteur d'entraînement, comportant deux embrayages à friction, ainsi que des vitesses présentant plusieurs embrayages et au moins un actionneur de boîte de vitesses pour passer les vitesses, avec les étapes suivantes :

- le couple du moteur d'entraînement est repris par le nouvel embrayage à friction associé à la nouvelle vitesse à passer ;
- avant d'abandonner l'ancienne vitesse à abandonner et avant ou pendant la reprise du couple, une force de précontrainte prédéfinie est appliquée au moyen de l'actionneur de boîte de vitesses sur l'embrayage de l'ancienne vitesse ;
- en cas d'équilibre du couple moteur et du couple d'embrayage, l'ancienne vitesse est abandonnée,

**caractérisé en ce que**, au début d'une réduction de la dérive du nouvel embrayage à friction, le couple moteur est commandé sous la forme d'une prescription de consigne, le couple moteur de consigne étant modifié après une fonction de saut et un couple souhaité par le conducteur étant ensuite adapté de façon largement linéaire, après le passage de vitesse.

2. Procédé selon la revendication 1, **caractérisé en ce que**, après l'abandon de l'ancienne vitesse, la dérive est réduite dans le nouvel embrayage à friction.

3. Procédé selon la revendication 1 ou 2, **caractérisé en ce que** la dérive est réduite dans le nouvel embrayage à friction, au moyen d'une intervention associée sur le couple moteur et sur le couple d'embrayage.

4. Procédé selon l'une quelconque des revendications 1 à 3, **caractérisé en ce que** le couple moteur de consigne est présélectionné selon la relation suivante :

$$\frac{1}{J_{Motor}} \int_{T_{Beginn}}^{T_{End}} (M_{Motor} - M_{Kupplung}) \cdot dt = \Delta\omega$$

(Motor = moteur - Kupplung = embrayage - Beginn = début)

5. Procédé selon l'une quelconque des revendications 1 à 4, **caractérisé en ce que**, après une large approximation du couple moteur au couple d'embrayage, le nouvel embrayage à friction est amorcé de sorte à donner lieu à un passage souple de l'état de dérive à l'état d'adhérence du nouvel embrayage à friction.

6. Procédé selon l'une quelconque des revendications 1 à 5, **caractérisé en ce que**, le couple moteur est modifié de sorte que le couple d'entraînement agissant sur la roue soit largement identique avant et après le passage de vitesse.

7. Procédé selon la revendication 6, **caractérisé en ce que** le couple moteur est modifié pendant la reprise du couple par le nouvel embrayage à friction.

8. Procédé selon l'une quelconque des revendications 1 à 7 pour la réalisation d'une opération de démarrage d'un véhicule avec un moteur d'entraînement avec une boîte de vitesses commandée en charge couplable avec ce dernier, **caractérisé en ce que** l'opération de démarrage est réalisée à une première vitesse à haut surrégime et **en ce que** le couple moteur est repris par le nouvel embrayage à friction, avant que l'état de dérive de l'ancien embrayage à friction associé à la première vitesse ne prenne fin ou avant que la vitesse de rotation de l'arbre d'entrée de la boîte de vitesses à la première vitesse n'atteigne le régime du moteur.

9. Boîte de vitesses commandée en charge, avec deux embrayages à friction, et avec des vitesses présentant plusieurs embrayages et avec au moins un actionneur de boîte de vitesses, pour la manoeuvre des vitesses, **caractérisée en ce que**, avant ou pendant la reprise du couple par un nouvel embrayage à friction associé à la vitesse à passer, l'actionneur de boîte de vitesses applique une force de précontrainte prédéfinie sur l'embrayage de l'ancienne vitesse à abandonner et en cas d'équilibre du couple moteur et du couple d'embrayage, abandonne l'ancienne vitesse, et **en ce que**, au début d'une réduction de dérive du nouvel embrayage à friction, le couple moteur est commandé sous la forme d'une prescription de consigne, le couple moteur de consigne étant modifié après une fonction de saut, pour être ensuite adapté de façon largement linéaire au couple souhaité par le conducteur, après le passage de vitesse.

10. Boîte de vitesses commandée en charge selon la revendication 9, **caractérisée par** une première vitesse à surrégime important et par un embrayage à friction, qui reprend le couple moteur de l'embrayage à friction associé à la première vitesse, avant que l'état de dérive de l'embrayage à friction associé à la première vitesse ne prenne fin ou avant que la vitesse de rotation de l'arbre d'entrée de la boîte de vitesses à la première vitesse n'atteigne le régime du moteur.

11. Boîte de vitesses commandée en charge selon la revendication 1 ou 10, **caractérisée par** une première vitesse à surrégime important pour le démarrage et par un embrayage à friction, qui reprend le couple moteur de l'embrayage à friction associé à la première vitesse, avant que l'état de dérive de l'embrayage à friction associé à la première vitesse ne prenne fin ou avant que la vitesse de rotation de l'arbre d'entrée de la boîte de vitesses à la première vitesse n'atteigne le régime du moteur.

Fig. 1

Auslegen alter Gang

Kupplungsmoment
neuer Gang

$\Box M_{Eingriff}$

$t_A$

3

1

Fläche:
$1/2 \cdot \Box M_{Eingriff} \cdot T_{Eingriff}$

$t_B = J_{Motor} \cdot \Box_\Box$

4

Anforderung
Soll Motormoment

Ist-Motormoment

$T_{Eingriff}$

Fig. 2

Beginn

S1

Gang_Ziel >
Gang_Ist — nein

ja

S2

MR_Ziel -> 0

S3

MR_Ziel = 0 — nein

ja

S4

Z_Zielgang -> 1

S5

Z_Zielgang = 1 — nein

ja

Übergabe an
Teilprozedur 2

Fig. 3A

Fig. 3B

Übergabe von
Teilprozedur 2

S12

ME_Soll (t) ermitteln

S13

ME_Soll =
ME_Soll(t_aktuell)

S14

MR_Ziel =
MR_Ziel(ME_Soll, NE, NG_Ziel)

S15

|NE-NG_Ziel| < DN    nein

ja

Ende

Fig. 3C

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1122116 A2